(19) Europäisches Patentamt
European Patent Office
Office européen des brevets

(11) EP 4 814 025 A1

(12) EUROPEAN PATENT APPLICATION
published in accordance with Art. 153(4) EPC

(43) Date of publication:
**30.09.2026 Bulletin 2026/40**

(21) Application number: **24894525.5**

(22) Date of filing: **15.11.2024**

(51) International Patent Classification (IPC):
***C08F 220/14*** (2006.01) ***C08F 220/32*** (2006.01)
***C08F 220/18*** (2006.01) ***C08L 101/16*** (2006.01)
***C08L 67/02*** (2006.01) ***C08L 67/04*** (2006.01)
***C08L 33/06*** (2006.01)

(52) Cooperative Patent Classification (CPC):
**C08F 220/14; C08F 220/18; C08F 220/32; C08L 33/06; C08L 67/02; C08L 67/04; C08L 101/16**

(86) International application number:
**PCT/KR2024/018053**

(87) International publication number:
**WO 2025/110632 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.11.2023 KR 20230165581**

(71) Applicant: **LG Chem, Ltd.**
**Seoul 07336 (KR)**

(72) Inventors:
- **PARK, Sung Eun**
  **Daejeon 34122 (KR)**
- **YOO, Ki Hyun**
  **Daejeon 34122 (KR)**
- **HAN, Sang Hoon**
  **Daejeon 34122 (KR)**
- **MOON, Jun Soo**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) ACRYLIC COPOLYMER, RESIN COMPOSITION, AND MOLDED ARTICLE

(57) The present invention relates to an acrylic copolymer, and specifically, to an acrylic copolymer that, when applied as a chemical compatibilizer for improving compatibility between different types of biodegradable resins, can improve the mechanical properties of the resin composition by improving compatibility between different types of biodegradable resins, and a resin composition and a biodegradable molded article comprising the same.

EP 4 814 025 A1

## Description

### [Technical Field]

[CROSS-REFERENCE TO RELATED APPLICATIONS]

The present application claims priority to Korean Patent Application No. 10-2023-0165581, filed on November 24, 2023, the entire content of which is incorporated herein for all purposes by reference.

[Technical Field]

The present invention relates to an acrylic copolymer, a resin composition, and a biodegradable molded article molded therefrom.

### [Background Art]

Thermoplastic resins have excellent mechanical and chemical properties and thus are used in various fields such as drinking water containers, medical uses, food wrappers, food containers, automobile molded articles, and agricultural vinyl.

Among them, polyethylene films have excellent mechanical properties, are harmless to the human body, and can be continuously deformed when heat is applied, so that they are mainly used as hot sealing bags for food packaging and agricultural mulching films.

The hot sealing bags for food packaging are widely used for vacuum packaging of food, etc., and polyethylene films that can achieve excellent bonding strength even at low sealing temperatures are mainly used.

The agricultural mulching films are mainly used for mulching farming. Mulching is a material that covers the surface of the soil when cultivating crops. When the upper surface of the soil is covered with various types of materials, the growth of weeds can be blocked, diseases and pests can be prevented, and the use of pesticides can be reduced accordingly. In addition, soil temperature can be easily controlled, beneficial bacteria in the soil can be proliferated, soil erosion can be prevented, and soil moisture can be maintained. As these mulching materials, leaves of crops such as rice straw and grass, polyolefin-based films, or the like may be used, and in general, synthetic resins such as polyethylene films are mainly used.

However, polyethylene films do not decompose in the natural environment and have limitations in recycling. In particular, recently, plastics such as discarded polyethylene films flow into the ocean and are broken down into very small microplastics by circulating water and sunlight in the ocean, which has become a problem. It is known that these microplastics are floating in the ocean in uncountable quantities of billions to tens of billions or more, which enter the bodies of marine organisms and accumulate in the ecosystem, affecting the entire food chain.

Accordingly, interest in biodegradable plastics has been increasing recently. Among them, polybutylene adipate terephthalate (hereinafter referred to as PBAT) and polylactic acid (hereinafter referred to as PLA) are receiving attention as biodegradable plastics, and efforts are being made to improve the compatibility of PBAT and PLA for biodegradable resin compositions containing these at the same time.

Compatibilizers for biodegradable resin compositions containing PBAT and PLA may be classified into physical compatibilizers and chemical compatibilizers according to their operating principles. A representative physical compatibilizer uses a copolymer containing PBAT or PLA. However, when using such a physical compatibilizer, there is a problem that the mechanical properties are deteriorated because the physical compatibilizer performs a role similar to a plasticizer.

Meanwhile, Korean Registered Patent Publication No. 10-2045863 (Patent Document 1) discloses a biodegradable polyester film including a copolymer containing an epoxy group and based on styrene, acrylic acid ester, and/or methacrylic acid ester. When the copolymer disclosed in Patent Document 1 is used as a compatibilizer for PBAT and PLA, if it is used in a certain amount or more, not only is PBAT-g-PLA formed at the interface between PBAT and PLA, but also a large amount of PBAT-g-PBAT and/or PLA-g-PLA is formed in each resin, causing a problem of rapidly increasing the viscosity of the resin composition. Since this rapid increase in viscosity is difficult to control during processing of the resin composition, there is a limitation in expanding the uses of the resin composition. Therefore, it is important to secure a compatibilizer that maintains performance as a chemical compatibilizer in a biodegradable resin composition containing different biodegradable resins, while controlling the increase in viscosity to an appropriate range to secure processability.

### [Prior Art Literature]

**[Patent Documents]**

(Patent Document 1) KR 10-2045863 B1

**[Disclosure]**

**[Technical Problem]**

The present invention has been devised to solve the problems of the prior art as mentioned above, and aims to provide an acrylic copolymer that can function as a chemical compatibilizer for improving compatibility between different types of biodegradable resins.

In addition, the present invention aims to provide a resin composition having excellent processability by suppressing a dramatic increase in viscosity while improving mechanical properties by applying the acrylic copolymer as a chemical compatibilizer to improve compatibility between different types of biodegradable resins.

In addition, the present invention aims to provide a molded article molded from the resin composition to exhibit biodegradability.

**[Technical Solution]**

In order to solve the above problems, the present invention provides a resin composition and a molded article.

(1) The present invention provides an acrylic copolymer comprising: an alkyl (meth)acrylate monomer unit, and a (meth)acrylate monomer unit containing an epoxy group, wherein the acrylic copolymer has an epoxy equivalent (E.E.W) of 100 g/eq or more and 1,000 g/eq or less, an epoxy number per molecule based on a number average molecular weight (Efn) of 30 or more and 80 or less, and an epoxy number per molecule based on a weight average molecular weight (Efw) of 20 or more and 170 or less.

(2) The present invention provides the acrylic copolymer according to (1) above, wherein the acrylic copolymer has an epoxy equivalent (E.E.W.) of 250 g/eq or more and 750 g/eq or less.

(3) The present invention provides the acrylic copolymer according to (1) or (2) above, wherein the acrylic copolymer has a number average molecular weight of 5,000 g/mol or more and 50,000 g/mol or less.

(4) The present invention provides the acrylic copolymer according to any one of (1) to (3) above, wherein the acrylic copolymer has a number average molecular weight of 10,000 g/mol or more and 20,000 g/mol or less.

(5) The present invention provides the acrylic copolymer according to any one of (1) to (4) above, wherein the acrylic copolymer has a weight average molecular weight of 5,000 g/mol or more and 100,000 g/mol or less.

(6) The present invention provides the acrylic copolymer according to any one of (1) to (5) above, wherein the acrylic copolymer has a weight average molecular weight of 15,000 g/mol or more and 40,000 g/mol or less.

(7) The present invention provides the acrylic copolymer according to any one of (1) to (6) above, wherein the acrylic copolymer has an epoxy number per molecule based on a number average molecular weight (Efn) of 35 or more and 70 or less.

(8) The present invention provides the acrylic copolymer according to any one of (1) to (7) above, wherein the acrylic copolymer has an epoxy number per molecule based on a weight average molecular weight (Efw) of 70 or more and 140 or less.

(9) The present invention provides the acrylic copolymer according to any one of (1) to (8) above, wherein the acrylic copolymer comprises: 40 wt% or more and 75 wt% or less of an alkyl (meth)acrylate monomer unit, and 25 wt% or more and 60 wt% or less of a (meth)acrylate monomer unit containing an epoxy group.

(10) The present invention provides the acrylic copolymer according to any one of (1) to (9) above, wherein the alkyl (meth)acrylate monomer unit comprises a methyl (meth)acrylate monomer unit, and an alkyl (meth)acrylate monomer unit having 2 to 10 carbon atoms.

(11) The present invention provides the acrylic copolymer according to any one of (1) to (10) above, wherein the acrylic copolymer comprises: 10 wt% or more and 65 wt% or less of a methyl (meth)acrylate monomer unit, 25 wt% or more and 60 wt% or less of a (meth)acrylate monomer unit containing an epoxy group, and 5 wt% or more and 60 wt% or less of an alkyl (meth)acrylate monomer unit having 2 to 10 carbon atoms.

(12) The present invention provides the acrylic copolymer according to any one of (1) to (11) above, wherein the acrylic copolymer comprises: a methyl methacrylate monomer unit, a glycidyl methacrylate monomer unit, and an alkyl (meth)acrylate monomer unit having 4 to 8 carbon atoms.

(13) The present invention provides a resin composition comprising: a first biodegradable resin, a second biodegradable resin, and at least one of an acrylic copolymer and a compatibilizing part formed from the acrylic copolymer, wherein the acrylic copolymer is the acrylic copolymer according to any one of (1) to (12) above.

(14) The present invention provides a molded article molded from the resin composition according to (13) above.

## [Advantageous Effects]

The acrylic copolymer of the present invention functions as a chemical compatibilizer for improving compatibility between different types of biodegradable resins, thereby exhibiting an effect of improving the mechanical properties of the resin composition by improving compatibility between different types of biodegradable resins.

In addition, when the acrylic copolymer of the present invention is applied as a chemical compatibilizer, a dramatic increase in viscosity can be suppressed during processing of the resin composition, thereby preventing a decrease in the processability of the resin composition. Furthermore, the amount used can be freely adjusted within a relatively wide range, so that it is particularly useful for developing resin compositions for various purposes.

## [Best Modes of the Invention]

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his invention.

In the present invention, the term 'monomer unit' may refer to a component, structure, or substance itself derived from a monomer, and as a specific example, may mean a repeating unit in a polymer formed by a monomer introduced during polymerization of the polymer and participating in the polymerization reaction.

The term 'composition' used in the present invention includes reaction products and decomposition products formed from materials of the composition as well as a mixture of the materials comprising the composition.

The present invention provides an acrylic copolymer.

According to one embodiment of the present invention, the acrylic copolymer can function as a chemical compatibilizer of a resin composition including different types of biodegradable resins.

According to one embodiment of the present invention, the acrylic copolymer may comprise: an alkyl (meth) acrylate monomer unit, and a (meth)acrylate monomer unit containing an epoxy group, wherein the acrylic copolymer may have an epoxy equivalent (E.E.W) of 100 g/eq or more and 1,000 g/eq or less, an epoxy number per molecule based on a number average molecular weight (Efn) of 30 or more and 80 or less, and an epoxy number per molecule based on a weight average molecular weight (Efw) of 20 or more and 170 or less.

According to one embodiment of the present invention, the acrylic copolymer controls the monomer type and the epoxy equivalent in the copolymer, and further simultaneously controls the epoxy number per molecule based on a number average molecular weight (Efn) and the epoxy number per molecule based on a weight average molecular weight (Efw), whereby when applied as a chemical compatibilizer to a resin composition containing different types of biodegradable resins, not only can compatibility be improved, but also a dramatic increase in viscosity can be suppressed to prevent a decrease in processability, and the amount used can be freely adjusted within a relatively wide range.

According to one embodiment of the present invention, the acrylic copolymer may be an acrylic copolymer copolymerized by including an alkyl (meth)acrylate monomer and a (meth)acrylate monomer containing an epoxy group. As a specific example, the acrylic copolymer may be a random copolymer copolymerized by including an alkyl (meth) acrylate monomer and a (meth)acrylate monomer containing an epoxy group, and may be a linear random copolymer. Here, '(meth)acrylate' is meant to include both acrylate and methacrylate.

According to one embodiment of the present invention, the alkyl (meth)acrylate monomer unit may comprise a methyl (meth)acrylate monomer unit, and an alkyl (meth)acrylate monomer unit having 2 to 10 carbon atoms. When the alkyl (meth)acrylate monomer unit includes a methyl (meth)acrylate monomer unit and an alkyl (meth)acrylate monomer unit having 2 to 10 carbon atoms at the same time, the flexibility of the polymer chain can be further increased.

According to one embodiment of the present invention, the acrylic copolymer may include an alkyl (meth)acrylate monomer unit formed from an alkyl (meth)acrylate monomer in an amount of 40 wt% or more and 75 wt% or less. As a specific example, the acrylic copolymer may include an alkyl (meth)acrylate monomer unit formed from an alkyl (meth) acrylate monomer in an amount of 40 wt% or more, 45 wt% or more, or 50 wt% or more, and also in an amount of 75 wt% or less, or 70 wt% or less. Within this range, the flexibility of the polymer chain can be further increased, the compatibility with PLA is excellent, and the affinity with PBAT is relatively excellent, so that the compatibility between PBAT and PLA can be further improved, and when a film is manufactured from the resin composition, chain diffusion and entanglement between the film interfaces can be increased.

According to one embodiment of the present invention, the acrylic copolymer may include a (meth)acrylate monomer unit containing an epoxy group formed from a (meth)acrylate monomer containing an epoxy group in an amount of 25 wt% or more and 60 wt% or less. As a specific example, the acrylic copolymer may include an epoxy group-containing

(meth)acrylate monomer unit formed from an epoxy group-containing (meth)acrylate monomer in an amount of 25 wt% or more, or 30 wt% or more, and also in an amount of 60 wt% or less, 55 wt% or less, 50 wt% or less, 45 wt% or less, or 40 wt% or less. Within this range, the flexibility of the polymer chain can be increased, the compatibility between different types of biodegradable resins can be further improved, and in particular, when a film is manufactured from the resin composition, chain diffusion and entanglement between film interfaces can be increased.

According to one embodiment of the present invention, the epoxy group-containing (meth)acrylate monomer may be a glycidyl group-containing (meth)acrylate monomer, and as a specific example, may be a glycidyl (meth)acrylate monomer. The epoxy group-containing (meth)acrylate monomer can function as a chemical compatibilizer by allowing the epoxy group contained in the monomer to react with the hydroxyl group (-OH) or carboxyl group (-COOH) contained in PBAT or PLA. In addition, when the reaction occurs at the interface between PBAT and PLA, the compatibility and interfacial adhesion between PBAT and PLA can be further improved.

According to one embodiment of the present invention, when the alkyl (meth)acrylate monomer unit includes a methyl (meth)acrylate monomer unit and an alkyl (meth)acrylate monomer unit having 2 to 10 carbon atoms, the acrylic copolymer may include the methyl (meth)acrylate monomer unit formed from the methyl (meth)acrylate monomer in an amount of 10 wt% or more and 65 wt% or less. As a specific example, the acrylic copolymer may include a methyl (meth) acrylate monomer unit formed from a methyl (meth)acrylate monomer in an amount of 10 wt% or more, 15 wt% or more, 20 wt% or more, 25 wt% or more, 30 wt% or more, or 35 wt% or more, and also 65 wt% or less, 60 wt% or less, 55 wt% or less, or 50 wt% or less. Within this range, the compatibility with PLA is excellent, and the affinity with PBAT is relatively excellent, so that the compatibility between PBAT and PLA can be further improved.

According to one embodiment of the present invention, when the alkyl (meth)acrylate monomer unit includes a methyl (meth)acrylate monomer unit and an alkyl (meth)acrylate monomer unit having 2 to 10 carbon atoms, the acrylic copolymer may include the alkyl (meth)acrylate monomer unit having 2 to 10 carbon atoms formed from the alkyl (meth) acrylate monomer having 2 to 10 carbon atoms in an amount of 5 wt% or more and 60 wt% or less. As a specific example, the acrylic copolymer may include an alkyl (meth)acrylate monomer unit having 2 to 10 carbon atoms formed from an alkyl (meth)acrylate monomer having 2 to 10 carbon atoms in an amount of 5 wt% or more, 6 wt% or more, 7 wt% or more, 8 wt% or more, 9 wt% or more, 10 wt% or more, 11 wt% or more, 12 wt% or more, 13 wt% or more, 14 wt% or more, or 15 wt% or more, and also 60 wt% or less, 55 wt% or less, 50 wt% or less, 45 wt% or less, 40 wt% or less, 35 wt% or less, 30 wt% or less, 25 wt% or less, or 20 wt% or less. Within this range, the flexibility of the polymer chain can be increased, the compatibility between different types of biodegradable resins can be further improved, and in particular, when a film is manufactured from the resin composition, chain diffusion and entanglement between film interfaces can be increased.

According to one embodiment of the present invention, the alkyl (meth)acrylate monomer having 2 to 10 carbon atoms may be at least one selected from the group consisting of ethyl (meth)acrylate, n-propyl (meth)acrylate, iso-propyl (meth)acrylate, n-butyl (meth)acrylate, iso-butyl (meth)acrylate, t-butyl (meth)acrylate, pentyl (meth)acrylate, hexyl (meth)acrylate, heptyl (meth)acrylate, octyl (meth)acrylate, iso-octyl (meth)acrylate, 2-ethylhexyl (meth)acrylate, decyl (meth)acrylate, iso-decyl (meth)acrylate, dodecyl (meth)acrylate, iso-bornyl (meth)acrylate, and lauryl (meth)acrylate. As a specific example, the alkyl (meth)acrylate monomer having 2 to 10 carbon atoms may be an alkyl (meth)acrylate monomer having 3 to 9 carbon atoms, or 4 to 8 carbon atoms, and as a more specific example, may be at least one selected from the group consisting of butyl (meth)acrylate and 2-ethylhexyl (meth)acrylate.

According to one embodiment of the present invention, the acrylic copolymer may include a methyl methacrylate monomer unit, a glycidyl methacrylate monomer unit, and an alkyl (meth)acrylate monomer unit having 4 to 8 carbon atoms, wherein the content of each monomer unit may be appropriately selected according to the intended resin composition within the content range described above.

According to one embodiment of the present invention, the acrylic copolymer may be manufactured by emulsion polymerization of a monomer mixture including the alkyl (meth)acrylate monomer and the (meth)acrylate monomer containing an epoxy group, and a polymerization composition including a polymerization initiator, an emulsifier, etc.

According to one embodiment of the present invention, during polymerization of the acrylic copolymer, the polymerization temperature and polymerization time may be performed as needed, and as a specific example, the polymerization may be performed within a polymerization temperature range of 50 °C or more and 200 °C or less with a polymerization time of 0.5 hours or more and 20 hours or less.

According to one embodiment of the present invention, the polymerization initiator may be an inorganic or organic peroxide, and as specific examples, may be a water-soluble polymerization initiator including potassium persulfate, sodium persulfate, ammonium persulfate, and the like, and an oil-soluble polymerization initiator including cumene hydroperoxide, benzoyl peroxide, and the like.

According to one embodiment of the present invention, an activator may be used together with the polymerization initiator to promote the initiation of the reaction of the peroxide, wherein the activator may be at least one selected from the group consisting of sodium formaldehyde sulfoxylate, sodium ethylenediaminetetraacetate, ferrous sulfate, and dextrose.

According to one embodiment of the present invention, the polymerization initiator may be added in an amount of 0.1 to 10 parts by weight, and specifically 0.1 to 5 parts by weight, relative to 100 parts by weight of the monomer mixture

based on the dry weight.

According to one embodiment of the present invention, the polymerization may be performed by further including a chain transfer agent from the viewpoint of increasing the efficiency of the polymerization reaction. The chain transfer agent may play a role in introducing homopolymers, which are polymers composed of only one type of monomer, into micelles during the polymerization process. The chain transfer agent may be a straight-chain or branched-chain alkylthiol compound having 5 to 20 carbon atoms, and as specific examples, may be hexanethiol, cyclohexanethiol, adamantanethiol, heptanethiol, octanethiol, nonanethiol, decanethiol, undecanethiol, dodecanethiol, hexadecanethiol, octadecanethiol, etc. In addition, the chain transfer agent may be added in an amount of 0.1 to 10 parts by weight, and specifically 0.1 to 5 parts by weight, relative to 100 parts by weight of the monomer mixture based on the dry weight.

According to one embodiment of the present invention, the emulsion polymerization may be performed by including the following steps (S10) to (S30):

Step (S10): a step of dispersing an emulsifier in a solvent to prepare an emulsion

Step (S20): a step of mixing a monomer mixture including each monomer component with an emulsifier, etc. to prepare a pre-emulsion

Step (S30): a step of mixing the emulsion prepared in step (S10) and the pre-emulsion prepared in step (S20) in the presence of a polymerization initiator and performing emulsion polymerization

According to one embodiment of the present invention, the emulsion polymerization for polymerizing the acrylic copolymer may be performed according to the steps (S10) to (S30).

First, in step (S10), an emulsion containing an emulsifier is prepared. This is separate from a pre-emulsion preparation process below. As the emulsifier, an anionic emulsifier may be used alone, or an anionic emulsifier, a cationic emulsifier, and a nonionic emulsifier may be used together, and the emulsion may be prepared by mixing the emulsifier component and a solvent such as water. In the process of preparing the emulsion, micelle initial particles having a size of several nanometers may be stably formed. In addition, step (S20) is a process of preparing a pre-emulsion including the monomer mixture, and the pre-emulsion is prepared by mixing each of the above-described monomers, emulsifiers, etc. in water. In this case, as the emulsifier, an anionic emulsifier may be used alone, or an anionic emulsifier and the above-described nonionic emulsifier may be used together. In this process, nano-sized latex particles may be formed in the pre-emulsion. That is, the above-described emulsifier may be used in at least one of the emulsion preparation step and the pre-emulsion preparation step. Then, in step (S30), a polymerization initiator is added to the prepared emulsion, and the pre-emulsion and polymerization initiator are continuously added at an equal ratio for a predetermined period of time.

The content of the polymerization initiator introduced into the emulsion may be more than 0 to 1 part by weight based on 100 parts by weight of the monomer mixture, and the content of the polymerization initiator introduced together with the pre-emulsion may be 0.1 to 2 parts by weight based on 100 parts by weight of the monomer mixture, and the time of the continuous introduction may be about 3 to about 7 hours. Through this process, the floating monomers or polymers in the pre-emulsion may be introduced into the initial particles generated in the emulsion. The results of this reaction may then undergo a process of heating polymerization in the presence of an additional polymerization initiator, through which the polymerization of the remaining monomers is achieved. In this case, the polymerization initiator may be additionally added in an amount of 0.1 to 10 parts by weight relative to 100 parts by weight of the monomer mixture, and the heating polymerization may be performed at a temperature of about 75°C to about 85°C for about 40 to about 80 minutes. This emulsion polymerization method is divided into an emulsion preparation process and a pre-emulsion preparation process, and thereafter, can be performed by a simple method of mixing the pre-emulsion with the emulsion, thereby improving process stability and productivity compared to conventional methods.

The emulsifier used in the emulsion polymerization may include at least one selected from the group consisting of an anionic emulsifier, a cationic emulsifier, and a nonionic emulsifier. The emulsifier is a substance having both a hydrophilic group and a hydrophobic group, and forms a micelle structure during the emulsion polymerization process and allows polymerization of each monomer to occur within the micelle structure. Emulsifiers commonly used in emulsion polymerization may be divided into anionic emulsifiers, cationic emulsifiers, and nonionic emulsifiers, and two or more of them may be mixed and used in terms of polymerization stability in emulsion polymerization. As a specific example, the nonionic emulsifier may include at least one selected from the group consisting of polyethylene oxide alkyl aryl ether, polyethylene oxide alkyl amine, and polyethylene oxide alkyl ester. In addition, the anionic emulsifier may include at least one selected from the group consisting of sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate. These may be used alone or in combination of two or more, and it may be more effective if anionic emulsifiers and nonionic emulsifiers are mixed and used. Additionally, the emulsifier may be used in an amount of about 0.1 to about 10 parts by weight, or about 1 to about 5 parts by weight, based on 100 parts by weight of the total monomer components used in the production of the latex particles.

According to one embodiment of the present invention, the polymerization composition may further include an

aqueous solvent such as water in addition to the emulsifier or monomer component. In this case, the aqueous solvent may be used in an amount of about 10 to about 1,000 parts by weight based on 100 parts by weight of the latex particles in terms of stability and viscosity control of the latex particles, and may be used so that the total solid content (TSC) is controlled to about 10 wt% to about 60 wt% based on the total amount of the composition.

According to one embodiment of the present invention, the acrylic copolymer may have an epoxy equivalent (E.E.W) of 100 g/eq or more and 1,000 g/eq or less. As a specific example, the acrylic copolymer may have an epoxy equivalent (E.E.W) of 100 g/eq or more, 110 g/eq or more, 120 g/eq or more, 130 g/eq or more, 140 g/eq or more, 150 g/eq or more, 160 g/eq or more, 170 g/eq or more, 180 g/eq or more, 190 g/eq or more, 200 g/eq or more, 210 g/eq or more, 220 g/eq or more, 230 g/eq or more, 240 g/eq or more, 250 g/eq or more, 260 g/eq or more, 270 g/eq or more, or 280 g/eq or more, and 1,000 g/eq or less, 950 g/eq or less, 900 g/eq or less, 850 g/eq or less, 800 g/eq or less, 750 g/eq or less, 700 g/eq or less, 650 g/eq or less, 600 g/eq or less, 550 g/eq or less, or 500 g/eq or less. Within this range, the compatibility between different types of biodegradable resins can be further improved. In particular, when the biodegradable resin is a polyester-based resin, the performance as a chemical compatibilizer can be further improved by effectively reacting with a hydroxyl group or carboxyl group of the polyester-based resin. The epoxy equivalent may be calculated using Equation 3 below on the basis of a number average molecular weight (Mn) value and an epoxy number per molecule based on a number average molecular weight (Efn) for the acrylic copolymer, and may be expressed by rounding off the decimal part. Here, the epoxy equivalent refers to an equivalent of an epoxy group in the polymer and/or copolymer containing the epoxy group, and is the number of grams of the epoxy group contained in 1 mole of the polymer and/or copolymer, expressed as g/mol or g/eq. In the present invention, the unit of the epoxy equivalent is expressed as g/eq, which is equivalent to g/mol, according to a conventional method.

[Equation 3]

$$E.E.W(g/eq) = Mn\ (g/mol) / Efn$$

In Equation 3 above, Efn is an epoxy number per molecule based on a number average molecular weight (Efn) described below.

According to one embodiment of the present invention, the number average molecular weight may be 5,000 g/mol or more and 50,000 g/mol or less. As a specific example, the acrylic copolymer may have a weight average molecular weight of 5,000 g/mol or more, 10,000 g/mol or more, 15,000 g/mol or more, or 20,000 g/mol or more, and also 50,000 g/mol or less, 45,000 g/mol or less, 40,000 g/mol or less, 35,000 g/mol or less, 30,000 g/mol or less, 25,000 g/mol or less, or 20,000 g/mol or less. Within this range, the acrylic copolymer can have a more excellent function as a chemical compatibilizer without impairing the inherent properties of different types of biodegradable resins, particularly polyester-based resins.

According to one embodiment of the present invention, the acrylic copolymer may have an epoxy number per molecule based on a number average molecular weight (Efn) of 30 or more and 80 or less. As a specific example, the acrylic copolymer may have an epoxy number per molecule based on a number average molecular weight (Efn) of 30 or more, 31 or more, 32 or more, 33 or more, 34 or more, 35 or more, 36 or more, 37 or more, 38 or more, 39 or more, 40 or more, 41 or more, 42 or more, 43 or more, 44 or more, or 45 or more, and also 80 or less, 79 or less, 78 or less, 77 or less, 76 or less, 75 or less, 74 or less, 73 or less, 72 or less, 71 or less, or 70 or less. Within this range, when the acrylic copolymer is applied as a chemical compatibilizer to a resin composition including different types of biodegradable resins, a dramatic increase in viscosity is suppressed as much as possible, so that the amount of the acrylic copolymer used can be freely adjusted in a relatively wide range, making it particularly useful for the development of resin compositions for various purposes. The epoxy number per molecule based on a number average molecular weight (Efn) may be calculated through Equation 2 below, and may be expressed by rounding off the decimal part.

Efn = DP / molar ratio of (meth)acrylate monomer units containing an epoxy group [Equation 2]

In Equation 2 above, the molar ratio of (meth)acrylate monomer units containing an epoxy group is the same value as the molar ratio of (meth)acrylate monomer units containing an epoxy group defined in the calculation of DP in Equation 1 below.

The DP can be calculated by measuring the molar ratio of each monomer unit by nuclear magnetic resonance spectroscopy using a 700 MHz NMR spectrometer from Bruker for an acrylic copolymer, and then calculating the degree of polymerization (DP) of the total monomer units (repeating units) by using the number average molecular weight (Mn) value of the acrylic copolymer according to Equation 1 below:

Mn (g/mol) = DP{(molecular weight of the first monomer (g/mol) * molar ratio of the first monomer) + ⋯ + (molecular weight of the $n^{th}$ monomer (g/mol) * molar ratio of the $n^{th}$ monomer)} [Equation 1]

In Equation 1 above, the value of "molecular weight * molar ratio" for the first to $n^{th}$ monomers in {} is determined according to the number (n) of monomers included in the acrylic copolymer. When the acrylic copolymer is a binary copolymer, a ternary copolymer, or a quaternary copolymer, the $n^{th}$ monomer refers to the second, third, and fourth monomers, respectively. The molar ratio of each monomer is a relative value based on the molar ratio of any one of the first to $n^{th}$ monomers. In this case, it may be expressed by rounding off the decimal part.

According to one embodiment of the present invention, the acrylic copolymer may have a weight average molecular weight of 5,000 g/mol or more and 100,000 g/mol or less. As a specific example, the acrylic copolymer may have a weight average molecular weight of 5,000 g/mol or more, 10,000 g/mol or more, 15,000 g/mol or more, or 20,000 g/mol or more, and also 100,000 g/mol or less, 90,000 g/mol or less, 80,000 g/mol or less, 70,000 g/mol or less, 60,000 g/mol or less, 50,000 g/mol or less, or 40,000 g/mol or less. Within this range, the mechanical properties of the resin composition can be further improved without impairing the inherent properties of different types of biodegradable resins, particularly polyester-based resins.

According to one embodiment of the present invention, the acrylic copolymer may have an epoxy number per molecule based on a weight average molecular weight (Efw) of 20 or more and 170 or less. As a specific example, the acrylic copolymer may have an epoxy number per molecule based on a weight average molecular weight (Efw) of 20 or more, 25 or more, 30 or more, 35 or more, 40 or more, 45 or more, 50 or more, 55 or more, 60 or more, 65 or more, 70 or more, 75 or more, or 80 or more, and also 170 or less, 169 or less, 168 or less, 167 or less, 166 or less, 165 or less, 164 or less, 163 or less, 162 or less, 161 or less, 160 or less, 159 or less, 158 or less, 157 or less, 156 or less, 155 or less, 154 or less, 153 or less, 152 or less, 151 or less, 150 or less, 149 or less, 148 or less, 147 or less, 146 or less, 145 or less, 144 or less, 143 or less, 142 or less, 141 or less, or 140 or less. Within this range, when the acrylic copolymer is applied as a chemical compatibilizer to a resin composition including different types of biodegradable resins, a dramatic increase in viscosity is suppressed as much as possible, thereby further preventing a decrease in processability. The epoxy number per molecule based on a weight average molecular weight (Efw) may be calculated through Equation 4 below, and may be expressed by rounding off the decimal part.

[Equation 4]

$$\text{Efw} = \text{Mw (g/mol)} / \text{E.E.W (g/eq)}$$

In Equation 4 above, Mw is a weight average molecular weight of the acrylic copolymer, and E.E.W means an epoxy equivalent.

According to one embodiment of the present invention, the acrylic copolymer may have a glass transition temperature of 45°C or more and 85°C or less. As a specific example, the acrylic copolymer may have a glass transition temperature of 45°C or more, 46°C or more, 47°C or more, 48°C or more, 49°C or more, or 50°C or more, and also 85°C or less, 84°C or less, 83°C or less, 82°C or less, 81°C or less, or 80°C or less. Within this range, the processing as a compatibilizer for a resin composition including different types of biodegradable resins can be easier.

The present invention provides a resin composition.

The resin composition may be a biodegradable resin composition comprising different types of biodegradable resins. As a specific example, the resin composition may comprise: a first biodegradable resin, a second biodegradable resin, and at least one of an acrylic copolymer and a compatibilizing part formed from the acrylic copolymer, wherein the acrylic copolymer is the acrylic copolymer described above.

The first biodegradable resin and the second biodegradable resin are biodegradable resins of different types, and may be any resin known as a biodegradable resin. However, as a specific example, the first biodegradable resin may be a polyester-based resin comprising an aliphatic polyester unit and an aromatic polyester unit. As a more specific example, the first biodegradable resin may comprise polybutylene adipate terephthalate (PBAT). The PBAT is a random copolymer of adipic acid, 1,4-butanediol, and terephthalic acid, and is proposed as an alternative to biodegradable resins for low-density polyethylene. In particular, the PBAT can secure biodegradability from an aliphatic polyester unit formed by adipic acid and 1,4-butanediol, while securing mechanical properties from an aromatic polyester unit formed by terephthalic acid and 1,4-butanediol.

The second biodegradable resin may be any biodegradable resin different from the first biodegradable resin, but as a specific example, the second biodegradable resin may include polylactic acid (PLA). The PLA is an eco-friendly biodegradable resin that is produced from bio-raw materials and naturally decomposes into water, carbon dioxide, etc. within several months by the action of microorganisms.

The resin composition may include the second biodegradable resin in an amount of 1 part by weight or more and

1,000 parts by weight or less, relative to 100 parts by weight of the first biodegradable resin. As a specific example, the resin composition may include the second biodegradable resin in an amount of 1 part by weight or more, 10 parts by weight or more, 20 parts by weight or more, 30 parts by weight or more, 40 parts by weight or more, or 50 parts by weight or more, and also in an amount of 1,000 parts by weight or less, 900 parts by weight or less, 800 parts by weight or less, 700 parts by weight or less, 600 parts by weight or less, 500 parts by weight or less, 400 parts by weight or less, 300 parts by weight or less, 200 parts by weight or less, or 150 parts by weight or less, relative to 100 parts by weight of the first biodegradable resin. Within this range, the mechanical properties and processability can be more excellent.

The resin composition may include at least one of the acrylic copolymer and the compatibilizing part formed from the acrylic copolymer in an amount of 0.01 parts by weight or more and 10 parts by weight or less, relative to 100 parts by weight of the first biodegradable resin. As a specific example, the resin composition may include at least one of the acrylic copolymer and the compatibilizing part formed from the acrylic copolymer in an amount of 0.01 part by weight or more, 0.05 part by weight or more, 0.10 part by weight or more, 0.20 part by weight or more, 0.30 part by weight or more, 0.40 part by weight or more, 0.50 part by weight or more, 0.60 part by weight or more, 0.70 part by weight or more, 0.80 part by weight or more, 0.90 part by weight or more, or 1.00 part by weight or more, and also 10.00 parts by weight or less, 9.00 parts by weight or less, 8.00 parts by weight or less, 7.00 parts by weight or less, 6.00 parts by weight or less, 5.00 parts by weight or less, 4.00 parts by weight or less, 3.00 parts by weight or less, or 2.00 parts by weight or less, relative to 100 parts by weight of the first biodegradable resin.

According to one embodiment of the present invention, the acrylic copolymer is a copolymer including a reactive functional group such as an epoxy group, and may be included as a chemical compatibilizer to improve the compatibility between different types of biodegradable resins in the resin composition. The acrylic copolymer may exist as it is in the resin composition, or may exist in the form of a compatibilizing part through a chemical bond by reaction of the reactive functional group with the different types of biodegradable resins, or the two forms may coexist.

According to one embodiment of the present invention, the resin composition may have a weight average molecular weight of the entire resin composition of 100,000 g/mol or more and 200,000 g/mol or less. As a specific example, the resin composition may have a weight average molecular weight of the entire resin composition of 100,000 g/mol or more, 105,000 g/mol or more, 110,000 g/mol or more, 115,000 g/mol or more, 120,000 g/mol or more, 125,000 g/mol or more, or 130,000 g/mol or more, and also 200,000 g/mol or less, 195,000 g/mol or less, 190,000 g/mol or less, 185,000 g/mol or less, 180,000 g/mol or less, 175,000 g/mol or less, 170,000 g/mol or less, 165,000 g/mol or less, 160,000 g/mol or less, or 155,000 g/mol or less. Within this range, the tensile properties of the resin composition can be further improved.

According to one embodiment of the present invention, the resin composition may have a melt index of 1.5 g/10 min or more and 14.0 g/10 min or less as measured at 190°C under a load of 5 kg according to ASTM D1238. As a specific example, the resin composition may have a melt index of 1.5 g/10 min or more, 2.0 g/10 min or more, 3.0 g/10 min or more, 3.5 g/10 min or more, 3.5 g/10 min or more, 4.0 g/10 min or more, 4.5 g/10 min or more, 5.0 g/10 min or more, 5.5 g/10 min or more, or 6.0 g/10 min or more, and also 14.0 g/10 min or less, 13.5 g/10 min or less, 13.0 g/10 min or less, 12.5 g/10 min or less, or 12.0 g/10 min or less as measured at 190°C under a load of 5 kg according to ASTM D1238. Within this range, the tensile strength of the resin composition is excellent while maintaining the viscosity at an appropriate level, thereby further improving processability.

According to one embodiment of the present invention, the resin composition may have a tensile strength of 200 kgf/cm$^2$ or more and 500 kgf/cm$^2$ or less as measured according to ASTM D638. As a specific example, the resin composition may have a tensile strength of 200 kgf/cm$^2$ or more, 210 kgf/cm$^2$ or more, 220 kgf/cm$^2$ or more, 230 kgf/cm$^2$ or more, 240 kgf/cm$^2$ or more, 250 kgf/cm$^2$ or more, 260 kgf/cm$^2$ or more, 270 kgf/cm$^2$ or more, 280 kgf/cm$^2$ or more, 290 kgf/cm$^2$ or more, or 300 kgf/cm$^2$ or more, and also 500 kgf/cm$^2$ or less, 490 kgf/cm$^2$ or less, 480 kgf/cm$^2$ or less, 470 kgf/cm$^2$ or less, 460 kgf/cm$^2$ or less, 450 kgf/cm$^2$ or less, 440 kgf/cm$^2$ or less, 430 kgf/cm$^2$ or less, or 420 kgf/cm$^2$ or less as measured according to ASTM D638.

According to one embodiment of the present invention, the resin composition may have an elongation of 150% or more as measured according to ASTM D638. As a specific example, the resin composition may have an elongation of 150 % or more, 160 % or more, 170 % or more, 180 % or more, 190 % or more, 200 % or more, 210 % or more, 220 % or more, 230 % or more, 240 % or more, 250 % or more, 260 % or more, 270 % or more, 280 % or more, 290 % or more, 300 % or more, or 310 % or more, and also 700 % or less, 690 % or less, 680 % or less, 670 % or less, 660 % or less, 650 % or less, 640 % or less, 630 % or less, 620 % or less, 610 % or less, 600 % or less, 590 % or less, 580 % or less, 570 % or less, 560 % or less, 550 % or less, 540 % or less, 530 % or less, 520 % or less, 510 % or less, 500 % or less, 490 % or less, 480 % or less, 470 % or less, 460 % or less, 450 % or less, 440 % or less, 430 % or less, 420 % or less, 410 % or less, or 400 % or less as measured according to ASTM D638.

The present invention provides a molded article.

The molded article may be a biodegradable molded article molded from the resin composition, i.e., the biodegradable resin composition. Here, the molded article includes both an injection molded article formed through injection molding or the like as well as a film molded article formed through film formation.

The molded article may be a biodegradable film, and as a specific example, may be a film for use as an agricultural mulching film or a food packaging material.

Hereinafter, examples of the present invention will be described in detail so that those skilled in the art can easily implement the present invention. However, the present invention may be embodied in a variety of forms and is not limited to the examples described herein.

### Examples and Comparative Examples: Preparation of Acrylic Copolymer

### Example 1

A total of 100 parts by weight of methyl methacrylate, glycidyl methacrylate, and butyl acrylate as monomers, 200 parts by weight of distilled water, and 0.5 parts by weight of sodium dioctyl sulfosuccinate (sodium bis(2-ethylhexyl) sulfosuccinate) as an emulsifier were added and stirred in a 3 L capacity glass reactor equipped with a thermometer, a stirrer, a dropping funnel, a nitrogen inlet tube, and a reflux condenser. The inside of the reactor was replaced with nitrogen gas during stirring, and then the glass reactor was heated to 70°C, 0.2 parts by weight of potassium persulfate was added, and stirred for 10 minutes.

Separately, 50 parts by weight of methyl methacrylate, 30 parts by weight of glycidyl methacrylate, and 20 parts by weight of butyl acrylate as monomers were added to a beaker, and sufficiently mixed for 30 minutes. 1-octanethiol as a chain transfer agent was added thereto in an amount of 0.7 parts by weight based on 100 parts by weight of the above monomers, and sufficiently mixed by a stirrer, and then the mixture was continuously added to the glass reactor evenly for 4 hours.

Thereafter, from the point when the polymerization reaction time of 4 hours had elapsed, the inside of the glass reactor was stirred while maintaining its temperature at 70°C for 30 minutes, and then cooled to room temperature. The obtained emulsion polymerization result was solidified using an aqueous calcium acetate solution, heat-treated by increasing the temperature to 90°C, dehydrated, and dried at 60°C for 16 hours to produce an acrylic copolymer.

### Example 2

An acrylic copolymer was obtained by performing the same method as in Example 1 except that the methyl methacrylate was added in an amount of 45 parts by weight instead of 50 parts by weight, the glycidyl methacrylate was added in an amount of 40 parts by weight instead of 30 parts by weight, the butyl acrylate was added in an amount of 15 parts by weight instead of 20 parts by weight, and the 1-octanethiol was added in an amount of 1.0 parts by weight instead of 0.7 parts by weight.

### Example 3

An acrylic copolymer was obtained by performing the same method as in Example 1 except that the methyl methacrylate was added in an amount of 35 parts by weight instead of 50 parts by weight, the glycidyl methacrylate was added in an amount of 50 parts by weight instead of 30 parts by weight, the butyl acrylate was added in an amount of 15 parts by weight instead of 20 parts by weight, and the 1-octanethiol was added in an amount of 1.4 parts by weight instead of 0.7 parts by weight.

### Example 4

An acrylic copolymer was obtained by performing the same method as in Example 1 except that the methyl methacrylate was added in an amount of 35 parts by weight instead of 50 parts by weight, the glycidyl methacrylate was added in an amount of 50 parts by weight instead of 30 parts by weight, and the butyl acrylate was added in an amount of 15 parts by weight instead of 20 parts by weight.

### Comparative Example 1

No acrylic copolymer was prepared.

### Comparative Example 2

An acrylic copolymer was obtained by performing the same method as in Example 1 except that the methyl methacrylate was added in an amount of 75 parts by weight instead of 50 parts by weight, and the glycidyl methacrylate was added in an amount of 5 parts by weight instead of 30 parts by weight.

**Comparative Example 3**

An acrylic copolymer was obtained by performing the same method as in Example 1 except that the methyl methacrylate was added in an amount of 70 parts by weight instead of 50 parts by weight, and the glycidyl methacrylate was added in an amount of 10 parts by weight instead of 30 parts by weight.

**Comparative Example 4**

An acrylic copolymer was obtained by performing the same method as in Example 1 except that the methyl methacrylate was added in an amount of 60 parts by weight instead of 50 parts by weight, the glycidyl methacrylate was added in an amount of 20 parts by weight instead of 30 parts by weight, and the 1-octanethiol was added in an amount of 1.4 parts by weight instead of 0.7 parts by weight.

**Comparative Example 5**

An acrylic copolymer was obtained by performing the same method as in Example 1 except that the methyl methacrylate was added in an amount of 60 parts by weight instead of 50 parts by weight, and the glycidyl methacrylate was added in an amount of 20 parts by weight instead of 30 parts by weight.

**Comparative Example 6**

An acrylic copolymer was obtained by performing the same method as in Example 1 except that the methyl methacrylate was added in an amount of 15 parts by weight instead of 50 parts by weight, the glycidyl methacrylate was added in an amount of 70 parts by weight instead of 30 parts by weight, and the butyl acrylate was added in an amount of 15 parts by weight instead of 20 parts by weight.

**Experimental Example**

**Experimental Example 1**: **Analysis of Characteristics of Acrylic Copolymer**

For the acrylic copolymers produced in Examples 1 to 4 and Comparative Examples 2 to 6, the number average molecular weight and the weight average molecular weight were measured by the following method, and the epoxy number based on a number average molecular weight (Efn) calculated according to Equation 2, the epoxy equivalent calculated according to Equation 3, and the epoxy number based on a weight average molecular weight (Efw) calculated according to Equation 4 were shown in Table 1 below.

* Weight average molecular weight (Mw) and number average molecular weight (Mn): For the obtained acrylic copolymer samples, the weight average molecular weight and the number average molecular weight were measured using gel permeation chromatography (GPC) (PL GPC220, Agilent Technologies) under the following conditions. In this case, the sample was dissolved in a solvent of Tetrahydrofuran (Stabilized with BHT) at a concentration of 2 mg/ml, and a portion of the solution was used.

- Column: PL MiniMixed B X 2
- Solvent: Tetrahydrofuran(Stabilized with BHT)
- Flow rate: 0.3 ml/min
- Sample concentration: 2.0 mg/ml
- Column temperature: 40°C
- Detector: Waters 2414 Refractive Index Detector
- Data processing: Empower
- Calibration curve: Polystyrene standards (9 molecular weights: 2,000 / 10,000 / 30,000 / 70,000 / 200,000 / 700,000 / 2,000,000 / 4,000,000 / 10,000,000) used

Epoxy number per molecule based on a number average molecular weight (Efn): For each acrylic copolymer of the examples and comparative examples, the molar ratio of each monomer unit was measured by nuclear magnetic resonance spectroscopy using a 700 MHz NMR spectrometer from Bruker. Then, the degree of polymerization (DP) of the total monomer unit (repeating unit) was calculated according to Equation 1-1 below using the number average molecular weight (Mn) value measured by the above measurement method.

Mn(g/mol) = DP{(methyl methacrylate molecular weight (g/mol) * molar ratio of methyl methacrylate monomer units) + (glycidyl methacrylate molecular weight (g/mol) * molar ratio of glycidyl methacrylate monomer units) + (butyl acrylate molecular weight (g/mol) * molar ratio of butyl acrylate monomer units)} [Equation 1-1]

In Equation 1-1 above, the molar ratio of each monomer is a relative value based on the molar ratio of glycidyl methacrylate.

For each acrylic copolymer of the examples and comparative examples, the degree of polymerization for the total monomer units calculated according to the Equation 1 above based on the molar ratio of glycidyl methacrylate (based on the GMA molar ratio of 1) was shown in Table 1 below. In this case, the decimal part was rounded off.

Next, the epoxy number per molecule based on a number average molecular weight (Efn) was calculated using Equation 2-1 below. In this case, the decimal part was rounded off.

[Equation 2-1]

Efn = DP / molar ratio of glycidyl methacrylate monomer units

In Equation 2-1 above, the molar ratio of the glycidyl methacrylate monomer units is the same value as the molar ratio of the glycidyl methacrylate monomer units defined when calculating DP in Equation 1-1 above.

* Epoxy equivalent (E.E.W, g/eq(=g/mol)): For each acrylic copolymer of the examples and comparative examples, the epoxy equivalent was calculated using Equation 3 below on the basis of the number average molecular weight (Mn) value measured according to the above measurement method and the epoxy number per molecule based on a number average molecular weight (Efn) calculated according to the above measurement method. In this case, the decimal part was rounded off. Here, the epoxy equivalent refers to an equivalent of an epoxy group in the polymer and/or copolymer containing the epoxy group, and is the number of grams of the epoxy group contained in 1 mole of the polymer and/or copolymer, expressed as g/mol or g/eq. In the present invention, the unit of the epoxy equivalent is expressed as g/eq, which is equivalent to g/mol, according to a conventional method.

[Equation 3]

E.E.W(g/eq) = Mn (g/mol) / Efn

* Epoxy number per molecule based on a weight average molecular weight (Efw): For each acrylic copolymer of the examples and comparative examples, the epoxy number per molecule based on a weight average molecular weight was calculated using Equation 4 below on the basis of the measured weight average molecular weight (Mw) and epoxy equivalent (E.E.W). In this case, the decimal part was rounded off.

[Equation 4]

Efw = Mw (g/mol) / E.E.W (g/eq)

[Table 1]

| Division | Molar ratio of monomer units | | | DP | Mn | Mw | E.E. W | Efn | Ef w |
|---|---|---|---|---|---|---|---|---|---|
| | MMA1) | GMA2) | BA3) | | (g/mol) | (g/mol) | (g/eq) | | |
| Example 1 | 2.35 | 1.00 | 0.75 | 42 | 20,000 | 40,000 | 473 | 42 | 85 |
| Example 2 | 1.63 | 1.00 | 0.42 | 56 | 20,000 | 30,000 | 359 | 56 | 84 |
| Example 3 | 1.00 | 1.00 | 0.34 | 35 | 10,000 | 20,000 | 286 | 35 | 70 |

(continued)

| Division | Molar ratio of monomer units | | | DP | Mn | Mw | E.E. W | Efn | Ef w |
|---|---|---|---|---|---|---|---|---|---|
| | MMA[1)] | GMA[2)] | BA[3)] | | (g/mol) | (g/mol) | (g/eq) | | |
| Example 4 | 1.00 | 1.00 | 0.34 | 70 | 20,000 | 40,000 | 286 | 70 | 140 |
| Comparative Example 1 | - | - | - | - | - | - | - | - | - |
| Comparative Example 2 | 22.00 | 1.00 | 4.50 | 7 | 20,000 | 40,000 | 2,918 | 7 | 14 |
| Comparative Example 3 | 10.00 | 1.00 | 2.20 | 14 | 20,000 | 40,000 | 1,424 | 14 | 28 |
| Comparative Example 4 | 4.30 | 1.00 | 1.10 | 14 | 10,000 | 20,000 | 713 | 14 | 28 |
| Comparative Example 5 | 4.30 | 1.00 | 1.10 | 28 | 20,000 | 40,000 | 713 | 28 | 56 |
| Comparative Example 6 | | 1.00 | | 99 | 20,000 | 40,000 | 203 | 99 | 197 |

1) MMA: methyl methacrylate
2) GMA: glycidyl methacrylate
3) BA: butyl acrylate

As shown in Table 1 above, it was confirmed that the acrylic copolymers prepared in Examples 1 to 4 had epoxy equivalents, weight average molecular weights, and epoxy number per molecule based on a weight average molecular weight (Efw) controlled within the ranges defined by the present invention.

On the other hand, it was confirmed that the acrylic copolymer manufactured in Comparative Example 2 had very high epoxy equivalents, which were out of the range defined by the present invention, and thus the epoxy number per molecule based on a weight average molecular weight (Efw) was very low.

In addition, it was confirmed that the acrylic copolymer manufactured in Comparative Example 3 had an epoxy number per molecule based on a weight average molecular weight (Efw) controlled within the range defined by the present invention, but the epoxy equivalent was very high, which was out of the range defined by the present invention.

In addition, it was confirmed that the acrylic copolymer manufactured in Comparative Example 4 had very a low epoxy equivalent, which was out of the range defined by the present invention, and thus the epoxy number per molecule based on a weight average molecular weight (Efw) was very low.

**Experimental Example 2: Preparation of Resin Composition**

Polybutylene adipate terephthalate (Manufacturer: Xinjiang Blueridge Tunhe Chemical Industry, product name: TH801T) and polylactic acid (Manufacturer: Natureworks, product name: Ingeo Biopolymer 2003D) were each dried in an oven at 60°C for 24 hours.

Then, 50 parts by weight of polybutylene adipate terephthalate, 50 parts by weight of polylactic acid, and 1 part by weight of each of the acrylic copolymers prepared in the above examples and comparative examples were mixed, and blended using a Haake Rheomix OS Lab mixer from Thermo Electron Karlsruhe GmbH at 170°C and 60 rpm for 10 minutes. Then, they were pulverized to prepare resin compositions for each of the examples and comparative examples.

In this case, the resin composition according to Comparative Example 1 was prepared without adding the acrylic copolymer.

**Experimental Example 3: Evaluation of Resin Composition**

For the resin composition of each of the examples and comparative examples manufactured in the above Experimental Example 2, the melt index, tensile strength, and elongation were measured by the following method, and were shown in Table 2 below.

* Melt index (g/10 min): The melt index of the prepared resin composition samples was measured using Gottfert MI-4 according to ISO 1133 (190°C, 5 kg).
* Tensile strength and elongation: Each of the prepared resin compositions was placed in a mold with a size of 125 mm X 125 mm X 2 mm, preheated at 180°C for about 5 minutes, pressed under a compressive load condition of 10 MPa for 3 minutes, and then quenched at room temperature to manufacture a specimen. The manufactured specimens were prepared as test specimens according to ASTM D638, Type 4, and the elongation and tensile strength were measured according to ASTM D638 under 50 mm/min conditions using Instron's universal property testing machine (Instron 3365).

[Table 2]

| Division | Melt index | Tensile strength | Elongation |
|---|---|---|---|
| | (g/10 min) | ($kgf/cm^2$) | (%) |
| Example 1 | 8.0 | 300 | 310 |
| Example 2 | 6.0 | 390 | 390 |
| Example 3 | 3.5 | 420 | 390 |
| Example 4 | 5.0 | 410 | 400 |
| Comparative Example 1 | 15.3 | 168 | 40 |
| Comparative Example 2 | 15.0 | 160 | 30 |
| Comparative Example 3 | 13.8 | 180 | 80 |
| Comparative Example 4 | 10.0 | 260 | 280 |
| Comparative Example 5 | 12.0 | 260 | 270 |
| Comparative Example 6 | 1.0 | 380 | 100 |

As shown in Table 2 above, it was confirmed that the resin compositions to which the acrylic copolymers of Examples 1 to 4 of the present invention were applied as a compatibilizer prevented a rapid decrease in melt index compared to the resin composition prepared in Comparative Example 1 that did not include a compatibilizer, while significantly improving the tensile strength and elongation.

On the other hand, it was confirmed that the resin compositions to which the acrylic copolymers of Comparative Examples 2 and 3 were applied as a compatibilizer maintained the melt index, tensile strength, and elongation at the same level as the resin composition prepared in Comparative Example 1 that did not include a compatibilizer.

In addition, it was confirmed that the resin compositions to which the acrylic copolymers of Comparative Examples 4 and 5 were applied as a compatibilizer showed a slight improvement in tensile strength and elongation compared to the resin composition prepared in Comparative Example 1 that did not include a compatibilizer, but showed inappreciable improvement in tensile strength and elongation compared to the resin compositions to which the acrylic copolymers of Examples 1 to 4 were applied as a compatibilizer.

In addition, it was confirmed that the resin compositions to which the acrylic copolymers of Comparative Example 6 were applied as a compatibilizer showed a rapid decrease in melt index compared to the resin compositions prepared in Comparative Example 1 that did not include a compatibilizer, thereby significantly reducing the processability, and showed almost no improvement in elongation compared to the resin compositions to which the acrylic copolymers of Examples 1 to 4 were applied as a compatibilizer.

From these results, it was confirmed that the acrylic copolymer of the present invention functions as a chemical compatibilizer for improving compatibility between different types of biodegradable resins, thereby improving the mechanical properties of the resin composition through improving the compatibility between different types of biodegradable resins, and preventing a decrease in the processability of the resin composition by suppressing a dramatic increase in viscosity during processing of the resin composition.

## Claims

1. An acrylic copolymer comprising: an alkyl (meth)acrylate monomer unit, and a (meth)acrylate monomer unit containing an epoxy group, wherein the acrylic copolymer has:

   an epoxy equivalent (E.E.W) of 100 g/eq or more and 1,000 g/eq or less,
   an epoxy number per molecule based on a number average molecular weight (Efn) of 30 or more and 80 or less, and
   an epoxy number per molecule based on a weight average molecular weight (Efw) of 20 or more and 170 or less.

2. The acrylic copolymer according to claim 1, wherein the acrylic copolymer has an epoxy equivalent (E.E.W.) of 250 g/eq or more and 750 g/eq or less.

3. The acrylic copolymer according to claim 1, wherein the acrylic copolymer has a number average molecular weight of

5,000 g/mol or more and 50,000 g/mol or less.

**4.** The acrylic copolymer according to claim 1, wherein the acrylic copolymer has a number average molecular weight of 10,000 g/mol or more and 20,000 g/mol or less.

**5.** The acrylic copolymer according to claim 1, wherein the acrylic copolymer has a weight average molecular weight of 5,000 g/mol or more and 100,000 g/mol or less.

**6.** The acrylic copolymer according to claim 1, wherein the acrylic copolymer has a weight average molecular weight of 15,000 g/mol or more and 40,000 g/mol or less.

**7.** The acrylic copolymer according to claim 1, wherein the acrylic copolymer has an epoxy number per molecule based on a number average molecular weight (Efn) of 35 or more and 70 or less.

**8.** The acrylic copolymer according to claim 1, wherein the acrylic copolymer has an epoxy number per molecule based on a weight average molecular weight (Efw) of 70 or more and 140 or less.

**9.** The acrylic copolymer according to claim 1, wherein the acrylic copolymer comprises: 40 wt% or more and 75 wt% or less of an alkyl (meth)acrylate monomer unit, and 25 wt% or more and 60 wt% or less of a (meth)acrylate monomer unit containing an epoxy group.

**10.** The acrylic copolymer according to claim 1, wherein the alkyl (meth)acrylate monomer unit comprises a methyl (meth) acrylate monomer unit, and an alkyl (meth)acrylate monomer unit having 2 to 10 carbon atoms.

**11.** The acrylic copolymer according to claim 1, wherein the acrylic copolymer comprises:

10 wt% or more and 65 wt% or less of a methyl (meth)acrylate monomer unit,
25 wt% or more and 60 wt% or less of a (meth)acrylate monomer unit containing an epoxy group, and
5 wt% or more and 60 wt% or less of an alkyl (meth)acrylate monomer unit having 2 to 10 carbon atoms.

**12.** The acrylic copolymer according to claim 1, wherein the acrylic copolymer comprises: a methyl methacrylate monomer unit, a glycidyl methacrylate monomer unit, and an alkyl (meth)acrylate monomer unit having 4 to 8 carbon atoms.

**13.** A resin composition comprising: a first biodegradable resin, a second biodegradable resin, and at least one of an acrylic copolymer and a compatibilizing part formed from the acrylic copolymer,
wherein the acrylic copolymer is the acrylic copolymer according to any one of claims 1 to 12.

**14.** A molded article molded from the resin composition according to claim 13.

**INTERNATIONAL SEARCH REPORT**

International application No. **PCT/KR2024/018053**

**A. CLASSIFICATION OF SUBJECT MATTER**

**C08F 220/14**(2006.01)i; **C08F 220/32**(2006.01)i; **C08F 220/18**(2006.01)i; **C08L 101/16**(2006.01)i; **C08L 67/02**(2006.01)i; **C08L 67/04**(2006.01)i; **C08L 33/06**(2006.01)i

According to International Patent Classification (IPC) or to both national classification and IPC

**B. FIELDS SEARCHED**

Minimum documentation searched (classification system followed by classification symbols)

C08F 220/14(2006.01); A01G 9/029(2018.01); C08G 63/91(2006.01); C08L 101/00(2006.01); C08L 101/16(2006.01); C08L 23/10(2006.01); C08L 53/00(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 수지(biodegradable resin), 아크릴계 공중합체(acrylic copolymer), 알킬(메트)아크릴레이트(alkyl (meth)acrylate), 에폭시기(epoxy group)

**C. DOCUMENTS CONSIDERED TO BE RELEVANT**

| Category* | Citation of document, with indication, where appropriate, of the relevant passages | Relevant to claim No. |
|---|---|---|
| A | US 2012-0010363 A1 (HSU, J. et al.) 12 January 2012 (2012-01-12)<br>See claims 1-17; and paragraphs [0005]-[0103]. | 1-14 |
| A | KR 10-2006-0120214 A (EASTMAN CHEMICAL COMPANY) 24 November 2006 (2006-11-24)<br>See claims 1-87. | 1-14 |
| A | KR 10-2012-0093004 A (LG CHEM, LTD.) 22 August 2012 (2012-08-22)<br>See claims 1-14. | 1-14 |
| A | ZHANG, Y. et al. Epoxy 기능화된 Acrylate 입자가 가소화된 PLA Blown Films의 물성에 미치는 영향. 폴리머. May 2016, vol. 40, no. 3, pp. 429-438 (The Influence of Epoxy Functionalized Acrylate Particles on the Properties of Plasticized PLA Blown Films. Polymer(Korea).)<br>See pages 429-438. | 1-14 |
| A | KR 10-2023-0102528 A (BGFECOMATERIALS) 07 July 2023 (2023-07-07)<br>See claims 1-15. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2025** | **13 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/018053**

| Patent document cited in search report | Publication date (day/month/year) | Patent family member(s) | Publication date (day/month/year) |
|---|---|---|---|
| US 2012-0010363 A1 | 12 January 2012 | JP 2012-017451 A | 26 January 2012 |
| | | JP 5833331 B2 | 16 December 2015 |
| | | US 8598272 B2 | 03 December 2013 |
| KR 10-2006-0120214 A | 24 November 2006 | CN 100898326 A | 17 January 2007 |
| | | CN 100898326 B | 16 May 2012 |
| | | EP 1699872 A1 | 13 September 2006 |
| | | EP 1699872 B1 | 28 June 2017 |
| | | EP 2562216 A2 | 27 February 2013 |
| | | EP 2562216 A3 | 21 May 2014 |
| | | EP 2562216 B1 | 21 June 2017 |
| | | JP 2007-515544 A | 14 June 2007 |
| | | JP 4976138 B2 | 18 July 2012 |
| | | KR 10-1151941 B1 | 01 June 2012 |
| | | US 2005-0154114 A1 | 14 July 2005 |
| | | US 7368503 B2 | 06 May 2008 |
| | | WO 2005-063886 A1 | 14 July 2005 |
| KR 10-2012-0093004 A | 22 August 2012 | KR 10-1388402 B1 | 22 April 2014 |
| KR 10-2023-0102528 A | 07 July 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230165581
- KR 102045863
- KR 102045863 B1